# EUROPEAN PATENT APPLICATION

(11) **EP 1 605 375 A1**
(43) Date of publication of application: **14.12.2005**
(21) Application number: 05104773.6
(22) Date of filing: 02.06.2005
(51) Int. Cl.: G06F 17/30

(54) **User interface for visualizing data sets with a dynamically adjustable scope**

(30) Priority: 10.06.2004 US 864986
(71) Applicant: MICROSOFT CORPORATION, Redmond, Washington 98052-6399 (US)
(72) Inventor: Goldthwaite, Flora P., Redmond, Washington 98052 (US); Cluts, Jonathan C., Redmond, Washington 98052 (US); Blanco, Victor K., Redmond, Washington 98052 (US)
(74) Representative: Grünecker, Kinkeldey, Stockmair & Schwanhäusser Anwaltssozietät

(57) **Abstract**

A user control for dynamically adjusting the scope of a set of content, information, and/or data and a user interface (UI) for representing the same are provided. A scope control tool represented, *e*.*g*., by a selectable icon, may be accessible from all screens in the UI and may be applied to both traditional list-type views of content or data, as well as to control screens, tools, or application screens. A method for applying scope to a set of data and representing the data on a UI in a manner which provides a readily visible indication of the amount of data in the data set and which provides for the prominent presentation of that data which may be most useful to the user is also provided.

## Description

### CROSS-REFERENCE TO RELATED APPLICATIONS

Not applicable.

### STATEMENT REGARDING FEDERALLY SPONSORED RESEARCH OR DEVELOPMENT

Not applicable.

### TECHNICAL FIELD

The present invention relates to computing environments. More particularly, the present invention relates to a user control for dynamically adjusting the scope of a set of content, information, and/or data and a user interface for representing the same. The present invention further relates to a method for applying scope control to a set of data and representing the data on a user interface in a manner which provides a readily visible indication of the amount of data in the data set and which provides for the prominent presentation of that data which may be most useful to the user.

### BACKGROUND OF THE INVENTION

As high speed computer networks extend beyond physical boundaries (*e*.*g*., work, home, etc.) to encompass the vast network space that is represented by the Internet, locating and bounding information, content and data becomes increasingly difficult. Even at the level of a single PC having significant storage capability (*e.g.*, terabyte storage coupled with the "WinFS" Storage Systems produced by Microsoft Corporation of Redmond, WA), providing the user with easy to understand views and organizational tools for filtering and displaying large sets of data can be challenging.

For instance, with regard to filtering data, while a user is often permitted to conduct content searches based upon key words and the like, the amount of information, data and content that is returned based upon such searches is often times still voluminous enough to be overwhelming as the user has limited filtering options and/or options for setting content parameters. Additionally, the user often has no means by which to organize and filter the returned data in a manner that would allow presentation of only a manageable amount of information and/or that presents the data in a manner wherein the content most useful to the user is presented in a more prominent fashion (*e.g.*, displayed first in a data listing).

With regard to displaying data, information and content, data sets are often too large for each data element within the set to be represented on the viewable display area. Thus, when viewing such large data sets, it may be difficult for the user to readily determine how much information, content, or data may be part of the data set but which is not present in the viewable display area.

Prior attempts to alert the user to the amount of data present in a given data set involve the use of data element counters and/or scroll bar sizing. Data element counters typically appear in small type near the lower region of the viewable display area. Such data element counters indicate to the user, for instance, that although only fifty data elements are visible in the viewable display area, there are actually several hundred data elements present in the data set.

Scroll bar sizing, on the other hand, does not offer a numeric count of data elements but rather graphically represents to the user the amount of data in the data set by the size of the scroll bar itself. The scroll bar typically is placed either on a lateral edge of the viewable display area (if the display is scrolling from top to bottom) and/or along the bottom edge of the viewable display area (if the display is scrolling from left to right). In the event that the data set contains more data than may be displayed in the viewable display area, the size of the scroll bar provides an indication of the amount of data in the data set. A larger scroll bar indicates less data than a smaller scroll bar. The absence of a scroll bar or a scroll bar large enough to encompass the entire scroll bar area indicates that all data in the data set is visible in the viewable display area.

Neither of the above means of alerting a user to the amount of data present in a data set is ideal. In particular, even though the data element counter and/or scroll bar may be persistently present, they are located on the periphery of the viewable display area making them just outside of the user's area of focus.

Accordingly, a user interface which presents data to a user in such a way that the relative amount of data in the data set is readily apparent would be desirable. Additionally, a method of providing access to a large range of data, content and information without overwhelming the user would be advantageous. Further, it would be advantageous if such method permitted presentation of the data in a manner wherein the data most useful to the user was prominently set forth.

### SUMMARY OF THE INVENTION

The present invention relates to a user interface (UI) for presenting and displaying data sets to a user that incorporates a filtering device referred to herein as "scope control." Scope control enables the user to dynamically adjust a current range of view for the information, content and data displayed on the UI. A scope control tool represented, *e.g.*, by a selectable icon, may be accessible from all screens in the UI. The tool may be applied to both traditional list-type views of content or data, as well as to control screens, tools, or application screens.

By combining scope control with the data display options permitted by, for example, a 3-D UI design, access may be provided to a large range of information without overwhelming the user. Scope control manages both the type of content and the amount of content that is displayed in any particular screen or view. The scope control tool may be set to define a relatively narrow setting, *e.g.*, a "Me" view wherein only data that is perceived or defined as "belonging" to the user may be displayed, a relatively broad setting, *e.g.*, a "World" view wherein all data in the world meeting one or more defined topical criteria may be displayed, or any number of settings in between - whether precisely defined or on a sliding scale between extremes. The present invention permits both the view and the number of data elements displayed in the viewable display area to shift as the scope applied to a data set is modified. The present invention further permits the inclusion and delineation of one or more narrow subsets of data within the display encompassed by a relatively broad scope setting, if desired.

Accordingly, in one aspect, the present invention is directed to a UI for representing content, information and data to a user. The user interface includes a configurable visual image display area configured to display at least one visual image and a scope menu display area configured to display a plurality of selectable scope links, each indicative of a data scope capable of being applied to a data set. Upon selection of a first selectable scope link, *e.g.*, a scope link indicative of the "Me" view, a visual image display is generated which displays visual images indicative of a first quantity of topically-related data elements. Upon selection of a second selectable scope link, *e.g.*, a scope link indicative of the "Family" view, a visual image display is generated which displays visual images indicative of a second quantity of topically-related data elements. In the event that more data elements are present in the data set represented by the "Family" view than are present in the data set represented by the "Me" view (as would typically be the case as the "Family" view generally would be broader than the "Me" view), the visual images indicative of the second quantity of topically-related data elements may appear smaller than the visual images indicative of the first quantity of topically-related data elements. Accordingly, a user would readily be able to visually determine, based upon the size of the visual images alone, that the number of data elements in the data set increased when the scope was changed from the "Me" view to the "Family" view. The degree of change in the size of the images may alert the user to the severity of the change in quantity.

Upon selection of a third selectable scope link, *e.g.*, a "Community" view, a visual display is generated which displays visual images indicative of a third quantity of topically-related data elements. If the third quantity is larger than the second quantity of topically-related data elements, the visual images indicative of the third quantity may appear smaller than the visual images indicative of the second quantity. This display scheme wherein fewer data elements in a data set are represented by larger visual images and more data elements are represented by smaller visual images may be carried forth over a progression of scopes from narrow to broad, whether in accordance with one or more precisely defined criteria or an a sliding analog-type scale between extremes.

If desired, the user interface may be a three-dimensional user interface and the visual images may be spatially offset from one another in, for instance, a concave "C" or carousel-like configuration spanning the viewable display area from left to right.

The present invention further relates to a method for applying scope to a set of data and representing the data on a user interface in a manner which provides a readily visible indication of the amount of data in the data set and which provides for the prominent presentation of that data which may be most useful to the user. The method may include displaying a first data set on a UI, receiving an indication of a scope to be applied to the first data set, and displaying a second data set on the UI, the second data set being determined in accordance with the indicated scope. If desired, each of the first and second data sets may be filtered based upon at least one first criterion, for instance, "music selections". Additionally, the order of presentation of the data elements in one or both of the first and second data set displays may be determined, in part, by a second filtering criterion, *e.g.*, without limitation, relevance, alphabetical order, date, file type, favorites, genre, and the like, if desired.

### BRIEF DESCRIPTION OF THE SEVERAL VIEWS OF THE DRAWINGS

The present invention is described in detail below with reference to the attached drawing figures, wherein:

FIG. 1 is a block diagram of an exemplary computing environment suitable for use in implementing the present invention;

FIG. 2 is a flow diagram showing a method for applying scope control to a data set and representing the data set to a user in accordance with an embodiment of the present invention;

FIG. 3 is an illustrative screen display of an exemplary three-dimensional (3-D) user interface (UI) illustrating the data set represented by the criteria media and music;

FIG. 4 is an illustrative screen display of an exemplary 3-D UI wherein the selectable scope tool indicates that the current view is scoped in accordance with the "Family" view;

FIG. 5 is an illustrative screen display of an exemplary 3-D UI wherein the selectable scope tool has been selected and the scope menu display is visible;

FIG. 6 is an illustrative screen display of an exemplary 3-D UI wherein the selectable scope tool indicates that the current view has been changed to the "Community" scope;

FIG. 7 is an illustrative screen display of an exemplary 3-D UI wherein the visual image display has changed in accordance with the change in scope from "Family" to "Community";

FIG. 8 is an illustrative screen display of an exemplary 3-D UI wherein a particular visual image has been selected and the information comprising the data element represented thereby is displayed;

FIG. 9 is an illustrative screen display of an exemplary 3-D UI illustrating a first data set in accordance with the "Me" view;

FIG. 10 is an illustrative screen display of an exemplary 3-D UI wherein a particular visual image has been selected and the information comprising the data element represented thereby is displayed;

FIG. 11 is an illustrative screen display of an exemplary 3-D UI wherein the selectable scope tool has been selected and the scope menu display is visible;

FIG. 12 is an illustrative screen display of an exemplary 3-D UI wherein the visual image display has changed in accordance with the change in scope from "Me" to "Community";

FIG. 13 is an illustrative screen display of an exemplary 3-D UI wherein a security element is displayed for selection and user verification prior to information comprising the data elements in the data set being displayed;

FIG. 14 is an illustrative screen display of an exemplary 3-D UI wherein security has been applied and the data elements represented by the visual images shown have been authorized thereby; and

FIG. 15 is an illustrative screen display of an exemplary 3-D UI wherein a particular visual image has been selected and the information comprising the data element represented thereby is displayed.

### DETAILED DESCRIPTION OF THE INVENTION

The present invention provides a user interface (UI) for presenting and displaying data sets to a user that incorporates a filtering device referred to herein as "scope control." Scope control enables the user to dynamically adjust a current range of view for the information, content and data displayed on the UI. A scope control tool represented, *e.g.*, by a selectable icon, may be accessible from all screens in the UI. The tool may be applied to both traditional list-type views of content or data, as well as to control screens, tools, or application screens. The scope may be set to define a relatively narrow view, *e.g.*, a "Me" view wherein only data that is perceived or defined as "belonging" to a particular individual (such as a user) may be displayed, a relatively broad view, *e.g.*, a "World" view wherein all data in the world meeting one or more defined topical criteria may be displayed, or any number of settings in between - whether precisely defined or on a sliding scale between extremes. The present invention permits both the view and the number of data elements displayed in the viewable display area to shift as the scope applied to a data set is modified. The present invention further permits the inclusion and delineation of one or more narrow subsets of data within the display encompassed by a relatively broad scope setting, if desired.

Having briefly described an overview of the present invention, an exemplary operating environment for the present invention is described below.

### Exemplary Operating Environment

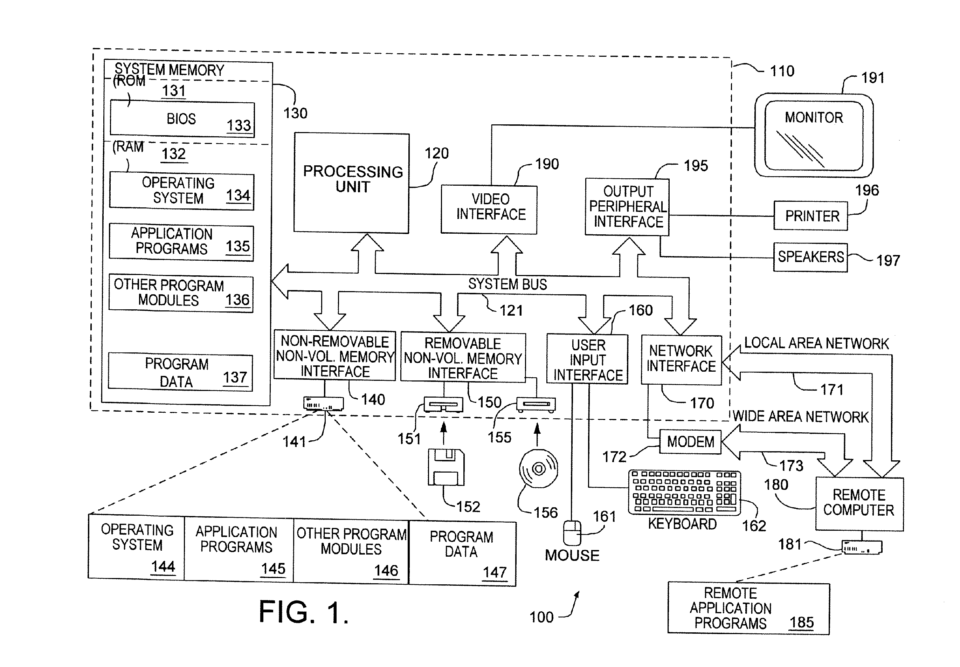

Referring to the drawings in general and initially to FIG. 1 in particular, wherein like reference numerals identify like components in the various figures, an exemplary operating environment for implementing the present invention is shown and designated generally as computing system environment 100. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

The invention is operational with numerous other general purpose or special purpose computing system environments or configurations. Examples of well known computing systems, environments, and/or configurations that may be suitable for use with the invention include, but are not limited to, personal computers, server computers, hand-held or laptop devices, multiprocessor systems, microprocessor-based systems, set top boxes, programmable consumer electronics, network PCs, minicomputers, mainframe computers, distributed computing environments that include any of the above systems or devices, and the like.

The invention may be described in the general context of computer-executable instructions, such as program modules, being executed by a computer. Generally, program modules include routines, programs, objects, components, data structures, etc., that perform particular tasks or implement particular abstract data types. The invention may also be practiced in distributed computing environments where tasks are performed by remote processing devices that are linked through a communications network. In a distributed computing environment, program modules may be located in both local and remote computer storage media including memory storage devices.

With reference to FIG. 1, an exemplary system for implementing the present invention includes a general purpose computing device in the form of a computer 110. Components of computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

Computer 110 typically includes a variety of computer-readable media. Computer-readable media can be any available media that can be accessed by computer 110 and includes both volatile and nonvolatile media, removable and non-removable media. By way of example, and not limitation, computer readable media may comprise computer storage media and communication media. Computer storage media includes both volatile and nonvolatile, removable and non-removable media implemented in any method or technology for storage of information such as computer-readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 110. Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer-readable media.

The system memory 130 includes computer storage media in the form of volatile and/or nonvolatile memory such as read only memory (ROM) 131 and random access memory (RAM) 132. A basic input/output system (BIOS) 133, containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, FIG. 1 illustrates operating system 134, application programs 135, other program modules 136, and program data 137.

The computer 110 may also include other removable/non-removable, volatile/nonvolatile computer storage media. By way of example only, FIG. 1 illustrates a hard disk drive 141 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD ROM or other optical media. Other removable/non-removable, volatile/nonvolatile computer storage media that can be used in the exemplary operating environment include, but are not limited to, magnetic tape cassettes, flash memory cards, digital versatile disks (DVDs), digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media discussed above and illustrated in FIG. 1, provide storage of computer-readable instructions, data structures, program modules and other data for the computer 110. In FIG. 1, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other programs 146 and program data 147 are given different numbers here to illustrate that, at a minimum, they are different copies. A user may enter commands and information into the computer 110 through input devices such as a keyboard 162 and pointing device 161, commonly referred to as a mouse, trackball or touch pad. Other input devices (not shown) may include a microphone, joystick, game pad, satellite dish, scanner, or the like. These and other input devices are often connected to the processing unit 120 through a user input interface 160 that is coupled to the system bus, but may be connected by other interface and bus structures, such as a parallel port, game port or a universal serial bus (USB). A monitor 191 or other type of display device is also connected to the system bus 121 via an interface, such as a video interface 190. In addition to the monitor 191, computers may also include other peripheral output devices such as speakers 197 and printer 196, which may be connected through an output peripheral interface 195.

The computer 110 may operate in a networked environment using logical connections to one or more remote computers, such as a remote computer 180. The remote computer 180 may be a personal computer, a server, a router, a network PC, a peer device or other common network node, and typically includes many or all of the elements described above relative to the computer 110, although only a memory storage device 181 has been illustrated in FIG. 1. The logical connections depicted in FIG. 1 include a local area network (LAN) 171 and a wide area network (WAN) 173, but may also include other networks. Such networking environments are commonplace in offices, enterprise-wide computer networks, intranets and the Internet.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the network interface 170, or other appropriate mechanism. In a networked environment, program modules depicted relative to the computer 110, or portions thereof, may be stored in a remote memory storage device. By way of example, and not limitation, FIG. 1 illustrates remote application programs 185 as residing on memory device 181. It will be appreciated that the network connections shown are exemplary and other means of establishing a communications link between the computers may be used.

Although many other internal components of the computer 110 are not shown, those of ordinary skill in the art will appreciate that such components and the interconnection are well known. Accordingly, additional details concerning the internal construction of the computer 110 need not be disclosed in connection with the present invention.

When the computer 110 is turned on or reset, the BIOS 133, which is stored in the ROM 131, instructs the processing unit 120 to load the operating system, or necessary portion thereof, from the hard disk drive 141 into the RAM 132. Once the copied portion of the operating system, designated as operating system 144, is loaded in RAM 132, the processing unit 120 executes the operating system code and causes the visual elements associated with the user interface of the operating system 134 to be displayed on the monitor 191. Typically, when an application program 145 is opened by a user, the program code and relevant data are read from the hard disk drive 141 and the necessary portions are copied into RAM 132, the copied portion represented herein by reference numeral 135.

### Method for Applying Scope Control to a Set of Data and Representing the Data to a User

As previously mentioned, the present invention relates to a UI for presenting and displaying data sets to a user. The UI utilizes a filtering device referred to herein as "scope control" that enables a user to dynamically adjust a current range of view for the information, content and data displayed on the UI. For example, the scope may be set to define a relatively narrow view, *e.g.*, a "Me" view wherein only data that is perceived or defined as "belonging" to a particular individual such as the user may be displayed, a relatively broad view, *e.g.*, a "World" view wherein all accessible data in the world meeting one or more defined topical criteria may be displayed, or any number of settings in between - whether precisely defined or on a sliding scale between extremes. The present invention permits both the view and the number of data elements displayed in the viewable display area to shift as the scope applied to a data set is modified. The present invention further permits the inclusion and delineation of one or more narrow subsets of data within the display encompassed by a relatively broad scope setting, if desired.

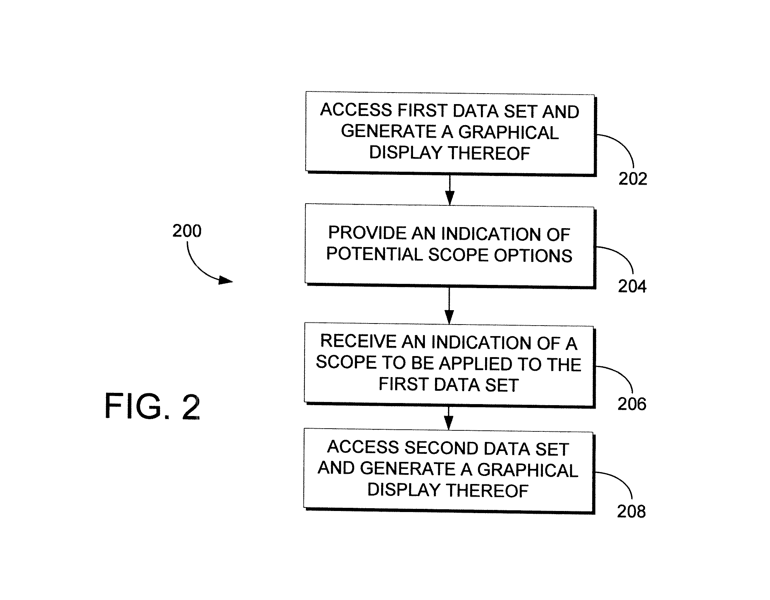

Turning to FIG. 2, a flow diagram is illustrated which shows a method 200 for applying scope control to a set of data and representing the data on a UI, for example, a two-dimensional or three-dimensional UI, in accordance with one embodiment of the present invention. Method 200 contemplates a first data set to which scope control may applied. The first data set may be any set of data having one or more data elements therein. The first data set may all reside in one location such as a file folder or may be drawn from a variety of storage locations. Also, the data elements comprising the data set may share a common characteristic such as each being an image element or may have a diversity of attributes. All such variations are contemplated to be within the scope of the present invention.

If desired, the first data set may be filtered based upon one or more defined criteria.
Additionally, the first data set may be defined by the user, a system component, a third party, or some combination thereof. Defining and accessing a data set for display are known to those of ordinary skill in the art and, accordingly, are not further discussed herein.

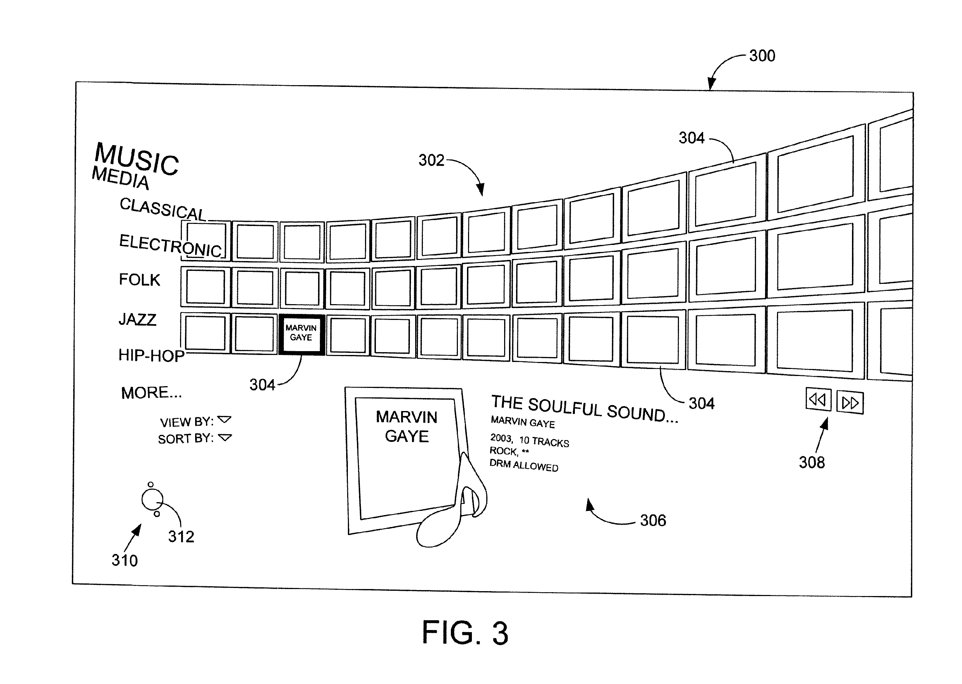

At 202, the first data set is accessed and a graphical representation thereof is generated and displayed in a viewable display area, for instance, a viewable area of a display device coupled with a computer. As more fully described below with reference to FIGs. 3-15, the graphical representation of the first data set may comprise a visual image associated with each data element included therein. For instance, if the first data set is comprised of a number of individuals who offer babysitting services, each individual may be visually represented by a thumbnail representation of their respective photographs. In this regard, it will be understood that the term "data element" as used he rein is not necessarily intended to refer to a single piece of data but rather refers to a recognizable data indicator which may be used to reference a number of related pieces of data. For example, in the above-mentioned babysitting example, an individual's photograph may be a "data element" but selection of the photograph may provide access to a variety of information about that individual including, *e.g.*, their name and contact information, the names of others who utilize their babysitting services, and/or their availability for babysitting on a particular date.

Once the first data set is accessed and displayed, scope control in accordance with the present invention may be applied to the data set. "Scope control" as defined herein enables a user to dynamically adjust a range of view for the information, content and data displayed on the user interface. Accordingly, at 204, an indication of potential scope options may be provided. Potential scope options may be precisely defined such that a relatively small number of scope options are available. Alternatively, potential scope options may be provided on a sliding scale between defined extremes such that a relatively large number of scope options may be available.

At 206, an indication of a scope to be applied to the first data set may be received. Once this indication is received, the first data set may be "scoped" in accordance therewith, a second data set may be accessed, the second data set being defined in accordance with the indicated scope, and a graphical representation of the second data set may be generated and displayed in the viewable display area. This is indicated at 208.

In one embodiment of the present invention, the size of the visual image associated with a data element varies as the number of data elements in a data set varies. For instance, if a given data set contains ten data elements therein, the visual images associated with each data element may be of a first size. If another data set contains fifty data elements therein, the visual images associated with each data element thereof may be of a second size which is relatively smaller than the first size. In this manner, a user may be able to readily ascertain, based solely on the size of the visual images displayed, how much data is present in the data set.

As with the first data set, the graphical representation of the second data set may comprise a visual image associated with each data element included therein. As such, if the number of data elements in the first data set and the number of data elements in the second data set differ, the relative sizes of the visual images associated with the data elements in each data set provide a readily visible indication to the user of the amount of data in each data set. That is, if the visual images in the first data set are larger than the visual images in the second data set, this would indicate to the user that the first data set contains relatively fewer data elements than the second data set. And, because the user is examining the data elements themselves in search of particular content, this visual indicator is within the user's area of focus.

In one embodiment of the present invention, the more limited the view to which the scope control is set, the more information that is associated with each data element in the data set that may be available to the user. For instance, in the above-mentioned babysitting example, if the data set is scoped to a "Me" view, the number of data elements within the data set may be fairly limited and several points of information may be provided for each individual, *e.g.*, name, contact information, for whom the individual has babysat and availability on a given date. However, if the data set is scoped to a "Community" view, the number of data elements within the data set may be much larger and only two points of information may be provided for each individual, *e.g.*, name and contact information.

If desired, the order in which the data elements appear on the viewable display area may be determined based upon one or more criteria. It is currently preferred that at least one criteria be utilized and that the criteria be determined, at least in part, based upon relevance. For instance, in the above-mentioned babysitting example, regardless of which scope has been applied to the data set, the data elements displayed may be oriented from left to right based upon the individuals' proximity to the user's residence, as proximity is likely the most relevant consideration to a user selecting a babysitter. The relevance criteria may be defined by the user, determined by a system component, or be supplied by a third party and may be dynamic based upon the data set being examined. For instance, while proximity may be the most relevant criteria to a user attempting to find a babysitter, a jazz lover looking for a particular music selection in a media data set might find music having a jazz classification to be the most relevant criteria for their search.

It will be understood and appreciated by those of ordinary skill in the art that the display order of the data elements may be determined, in addition to relevance, upon other criteria such as, by way of example only, alphabetical order, date, file type, favorites, genre, and the like. All such variations are contemplated to be within the scope hereof.

The present invention may be more readily understood with reference to FIGs. 3-15 and the following examples. It will be understood and appreciated by those of ordinary skill in the art that the figures and examples are merely illustrative and are not intended to limit the scope of the invention in any way.

A first exemplary scenario in which the content scoping and display schemes of the present invention may be applied is with regard to locating a particular desired music selection. This example is illustrated in FIGs. 3-8. Initially, as previously described, a first data set may be accessed and displayed. A display of the first data set, which has already been filtered at least with regard to the category "Media" and the sub-category "Music", is shown in FIG. 3. In FIG. 3, an illustrative screen display 300 provides an exemplary screen view in accordance with one embodiment of the present invention. The screen display 300 includes a configurable visual image display area 302 configured to display at least one visual image 304. Each visual image 304 is indicative of a data element within a data set and represents a selectable link to information which comprises the data element represented thereby.

By way of example, and not limitation, the data set illustrated in FIG. 3 is a media data set illustrating available music selections in each of five classifications - classical, electronic, folk, jazz, and hip-hop. Selection of any one of the visual images 304 links the user to the particular music selection represented thereby. Thus, selection of the visual image located in the third row, third column, selects a Marvin Gaye album entitled "The Soulful Sound ...". A selection display area 306 may show what music selection has been selected and may display additional information, such as year produced, number of tracks, classification, etc., if desired.
Selection of a particular visual image may also initiate play of the selected album, if desired.

The screen display 300 of FIG. 3 is a three-dimensional display wherein the visual images 304 are provided in a concave "C" or carousel-like configuration spanning the viewable display area from left to right. It will be understood and appreciated by those of ordinary skill in the art that this is only one possible visual configuration and, accordingly, is not intended to limit the scope of the invention in any way. A number of conceivable configurations may be presented which provide the user with a readily visib le indication of the number of data elements present in the data set, as well as an indication of the content of each data element. It will be further understood that the display need not be three-dimensional and that other display and/or communications media, *e*.*g*., a two-dimensional display or a hardware ID design, may be utilized as well. All such variations are contemplated to be within the scope of the present invention.

A selectable scroll display 308 is also provided on the screen display 300. The presence of the scroll display 308 alerts the user that there are additional data elements within the data set that are not visible on the viewable display area. Selection of the selectable scroll display 308 scrolls the display in the appropriate direction modifying the visual images 304 (and thus the data elements represented thereby) that are visible on the viewable display area. In the event that no further data elements are present in a given direction, selection of the selectable scroll display 308 indicative of that direction will not cause modification of the display alerting the user that no further data elements are present in that direction.

A scope menu display area 310 is also provided on the screen display 300. By way of example only, assume that a user is unable to locate a desired music selection among the visual images 304 displayed on the screen display 300. As such, the user may wish to search for the desired music selection within a larger data set than that which is currently being displayed. To do so, the user may initiate a search of a larger data set by selecting a scope control tool 312 represented, for example, by a selectable icon present in the scope menu display area 310 of the screen display 300.

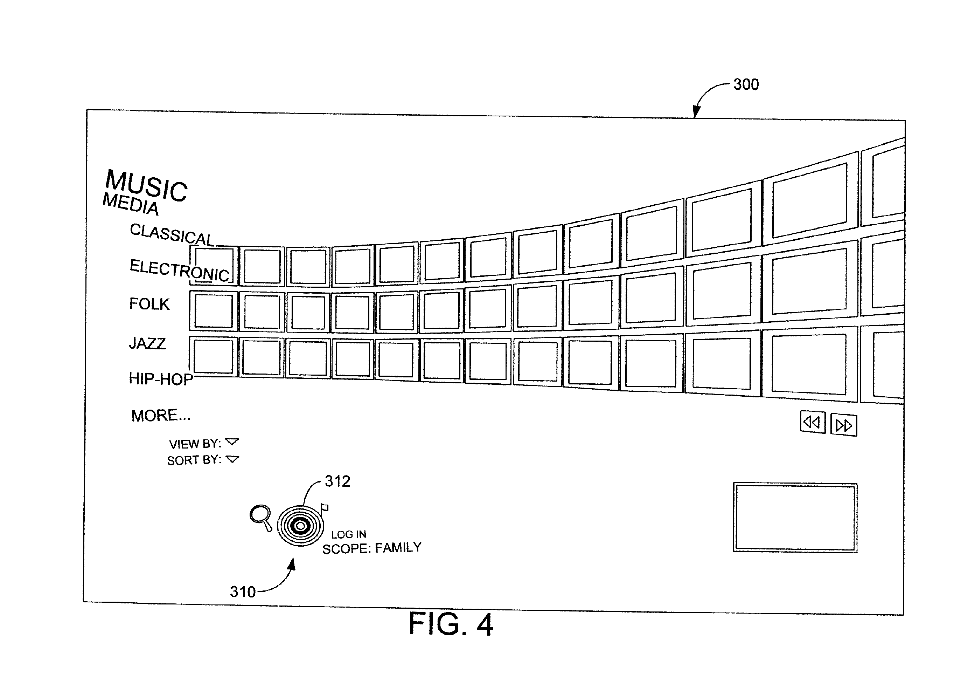

If a scope has already been applied to the data set, selection of the scope control tool 312 may initially alert the user to which view the scope is currently set. Turning to FIG. 4, it can be seen in the scope menu display area 310 that the view currently presented on the screen display 300 is set to a "Family" scope. The "Family" scope may be defined, for purposes of the present example only, as all music selections perceived or defined as "belonging" to any member of the user's family, that is, music selections to which any family member has purchased the rights (as well as the rights to share those selections with other family members). Thus, shown on the screen display 300 are all music selections which belong to any member of the user's family, *i*.*e*., are part of any family member's individual music libraries.

In one embodiment, a default scope may be applied to all data sets as they are initially accessed. By way of example only, data sets may be provided in the "Me" view accessing only data sets meeting the search criteria that are perceived or defined as "belonging" to the user. Alternatively, data sets as initially accessed may not have a scope applied to them at all unless and until a scope view is selected by the user. It is worth noting, however, that this scenario would be similar to setting a "World" view as a default scope view.

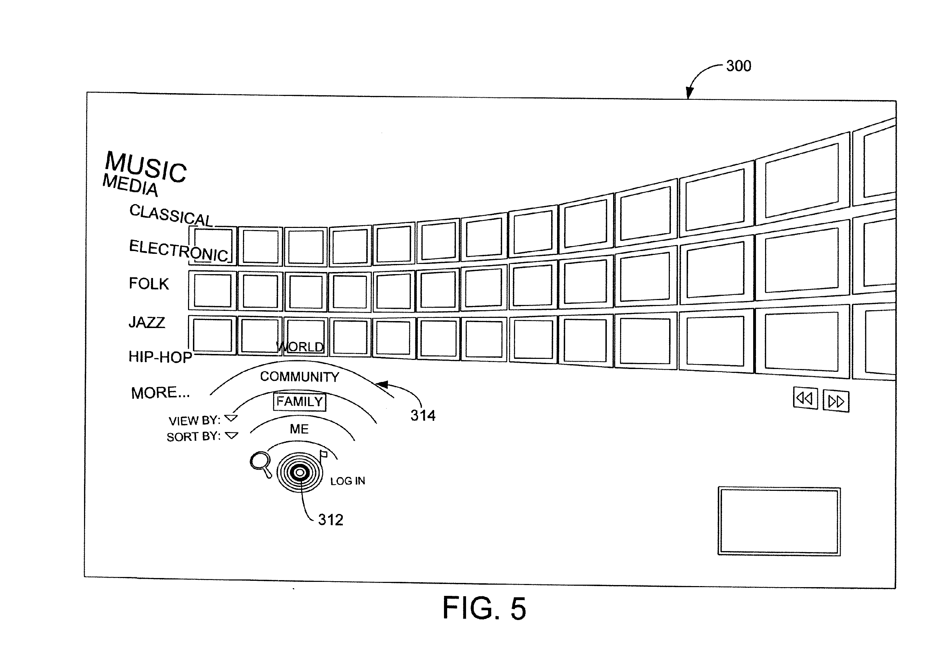

As the user is unable to locate a desired music selection within the family members' music libraries, the scope of the view on the screen display 300 may be broadened to offer a larger quantity of music selections. As shown in FIG. 5, selection of the scope control tool 312 presents the user with a scope menu 314 having a visual indication of the scope view options which may be selected. Defined in the scope menu 314 of FIG. 5 are four scope view options: "Me", "Family", "Community", and "World". It will be understood and appreciated by those of ordinary skill in the art that the particular scope view options shown are provided for illustrative purposes only. Any number of precisely defined scope view options may be provided or a sliding scale between defined extremes may be provided permitting a large array of different potential view options. All such variations are contemplated to be within the scope hereof.

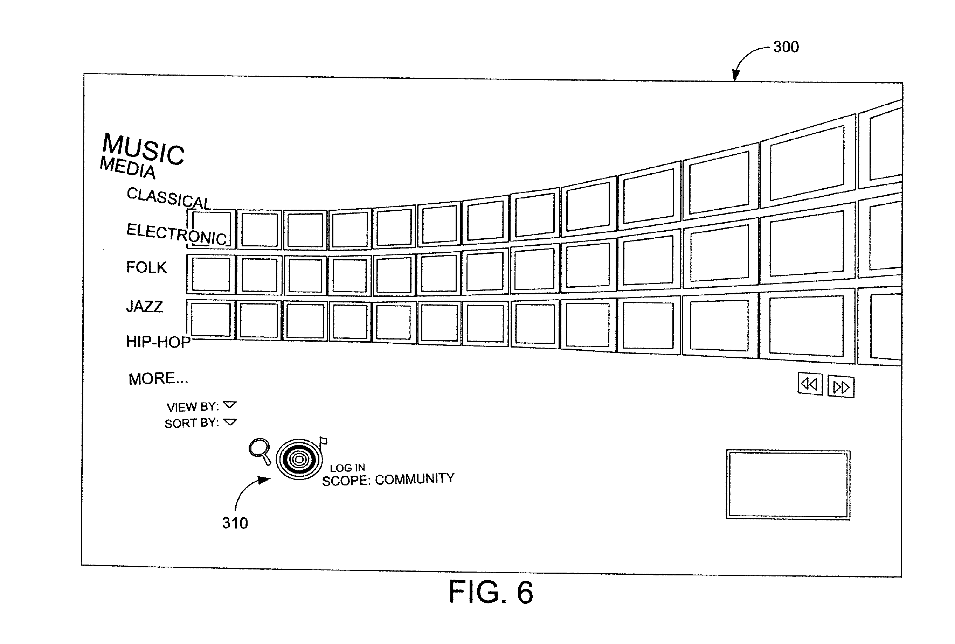

FIG. 5 indicates that the "Family" view is currently selected on the scope menu 314. If the user modifies the scope view and selects the "Community" view option, the scope menu 314 itself may cease to be visible and an indication in the scope menu display area 310 may be presented which indicates the view presented on the screen display 300 has been changed to the "Community" view. This is shown in FIG. 6. Selecting a "Community" view of music selections will initiate a search for all music selections in the community to which the user has rights. In addition to those displayed in the "Family" view, this would include, for instance, music selections to which the user has access through a paid music subscription service and the like.

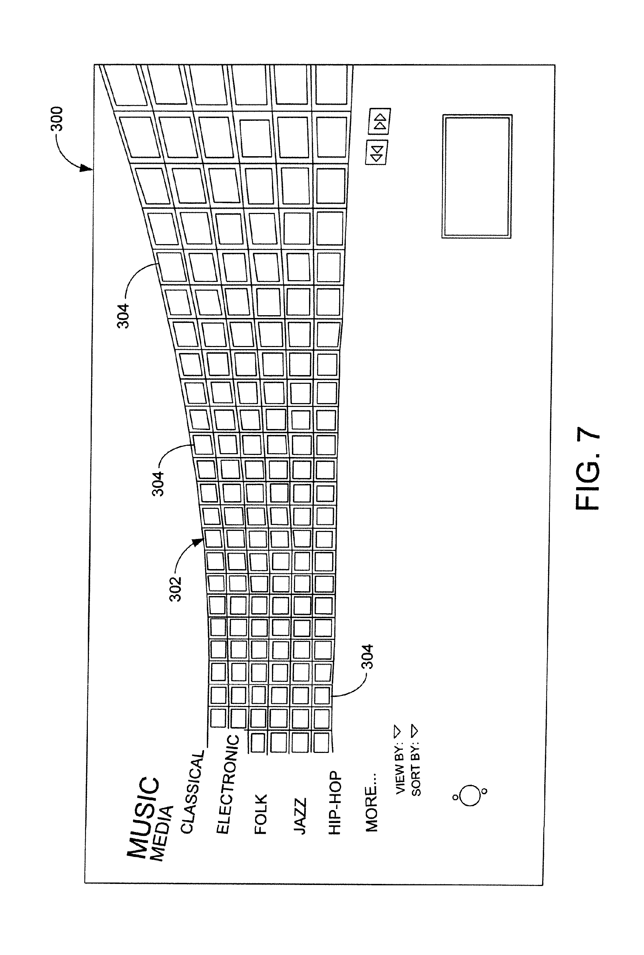

Subsequently or simultaneously, the visual images 304 which are indicative of the data elements in the displayed data set may be modified such that visual images 304 representing all music selections available in the "Community" data set may be visible to the user. This is shown in FIG. 7. Note that the visual images 304 shown in the configurable visual image display area 302 of FIG. 7 have not only increased in number but have also decreased in size. Thus, the size of the visual images 304 themselves provide a visual indication to the user that the number of data elements in the selected data set has increased.

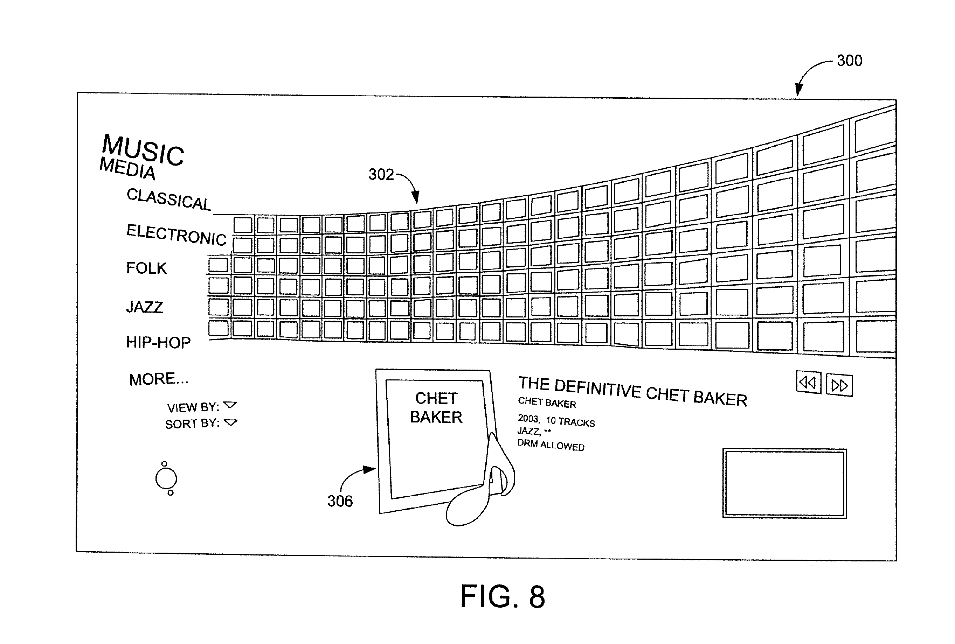

As with the visual images 304 shown in the "Family" view, upon selection of each of the visual images 304 shown in the "Community" view represented in the configurable visual image display area 302 of the display screen 300 the user may be linked to the particular music selection represented thereby. Thus, if the music selection the user desired but was unable to find in the "Family" view was a Chet Baker album, the user may scroll through the visual images 304 shown in the "Community" view and, hopefully, locate the desired album. In this example, selection of the visual image located in the top row, fourteenth column from the left, selects the Chet Baker album entitled "The Definitive Chet Baker". The information associated with the selected visual image 304 may then be shown in the selection display area 306 and, if desired, play of the music selection may be initiated. This is shown in FIG. 8.

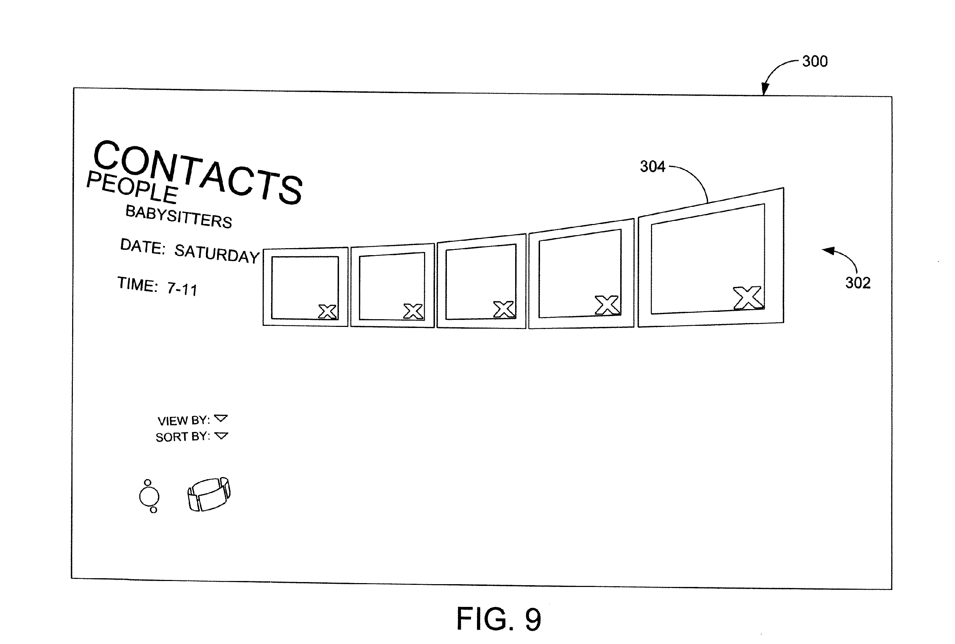

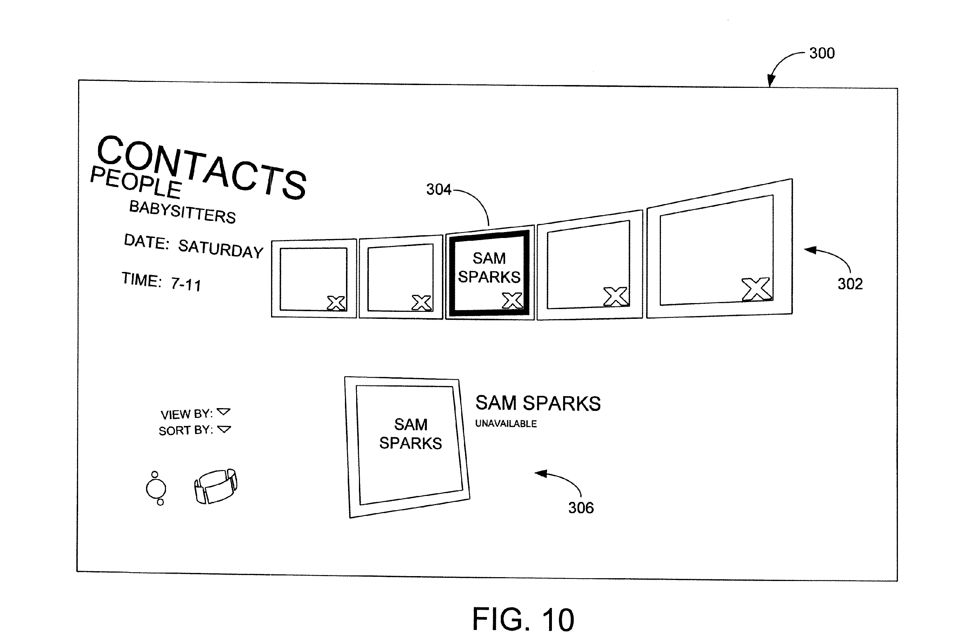

A second exemplary scenario in which the content scoping and display schemes of the present invention may be applied is with regard to locating a babysitter. This example is shown in FIGs. 9-15. The data set shown in FIG. 9 has already been filtered at least with regard to the category of "Contacts" and the sub-categories of "People" and "Babysitters", as well as based upon the day ("Saturday") and time (7:00-11:00) for which babysitting services are desired. Five visual images 304 are shown in the configurable visual image display area 302 of the screen display 300 of FIG. 9, each representing an individual indicated in the user's contact folder to be available for babysitting services. Selection of any of the visual images 304 links the user to information about the individual including, for instance, the individual's name, contact information and availability on a particular date. For example, with reference to FIG. 10, if the middle visual image 304 in the configurable visual image display area 302 is selected, a larger image may be represented in the selection display area 306 which may indicate that Sam Sparks has been selected and that Sam is not available for babysitting on Saturday from 7:00 to 11:00.

In the embodiment illustrated in FIGs. 9 and 10, it should be noted that the user did not have to select Sam Sparks visual image 304 to determine that he was not available for the desired day and time. In the lower right-hand corner of each visual image 304, an X is present indicating that all of the individual's whose photographs are shown in the view of FIGs. 9 and 10 are not available on Saturday from 7:00 to 11:00.

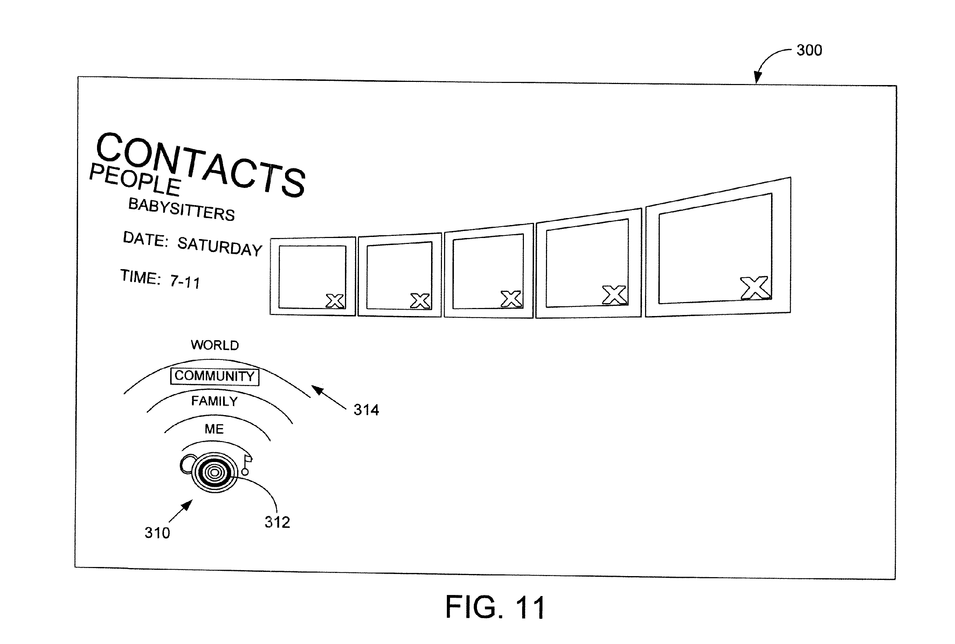

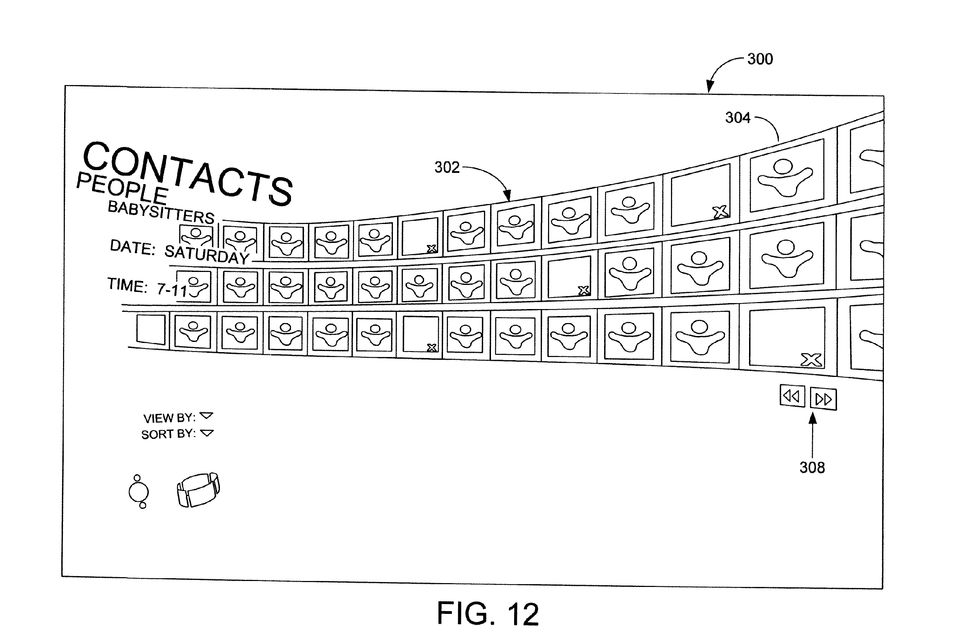

As the user in this example is still in need of a babysitter for the desired day and time, and none of the babysitting contacts in the user's own contact folder are available, the user may desire to use the scoping tool of the present invention to broaden the search. Referring to FIG. 11, the user may initiate a search of a larger data set by selecting the scope control tool 312 in the scope menu display area 310 of the screen display 300. Selection of the scope control tool 312 presents the user with a scope menu 314 having a visual indication of the scope view options which may be selected. If the user desires to broaden the search to the community, the "Community" view option would be selected from the scope menu 314 at which time the scope menu 314 itself would cease to be visible and the visual images 304 which are indicative of the data elements in the displayed data set may be modified such that visual images 304 representing all babysitters available in the "Community" may be visible to the user. This is shown in FIG. 12. Note that the definition of what constitutes the "community" is dynamic based upon the search being conducted. For instance, the "community" for music selections in the above example includes all music selections in the paid subscription service community to which the user has access. However, the "community" for babysitters may be a particular neighborhood or church community or the like.

Note that in FIG. 12, only those individuals whose photographs were available to the user when viewing the user's own contact folder are shown, although the number of visual images represented in the configurable visual image display area 302 of the screen display 300 has increased and the size of the visual images 304 has decreased. (Note also that a scroll display 308 has appeared indicating to the user that there are additional data elements within the data set that are not visible in the configurable visual image display area 302.) All remaining visual images 304 in the configurable visual image display area 302 are simply represented by generic place holders such that an accurate picture is being provided with regard to the number of data elements within the selected data set but specific information about each data element is being withheld.

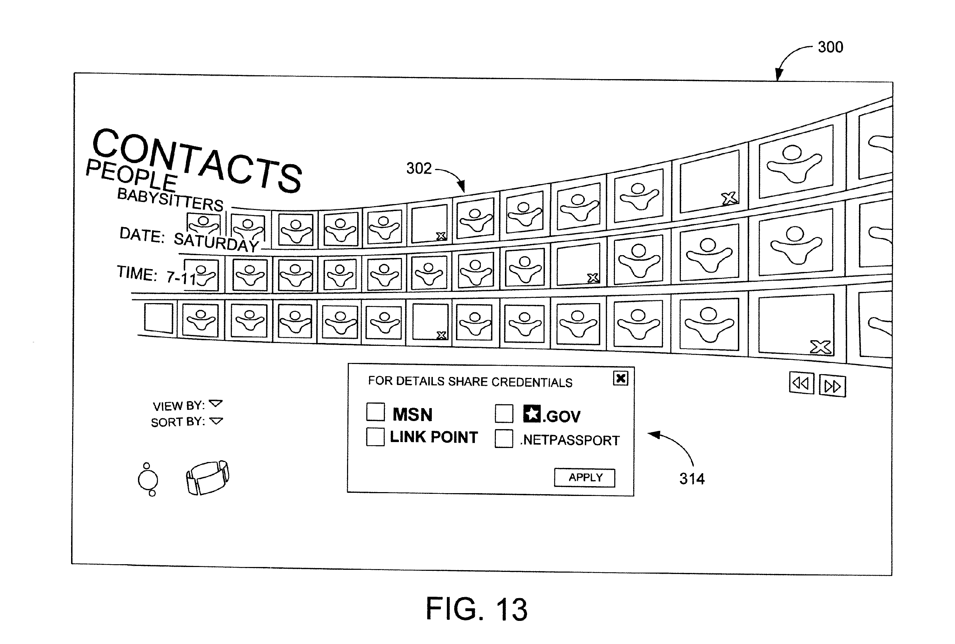

As the user has broadened the scope to the "Community" level and personal information is being requested about the individuals who comprise the requested data set, the user may be asked to provide some verification of identity and trustworthiness before access to the desired information is provided. This is shown in FIG. 13.

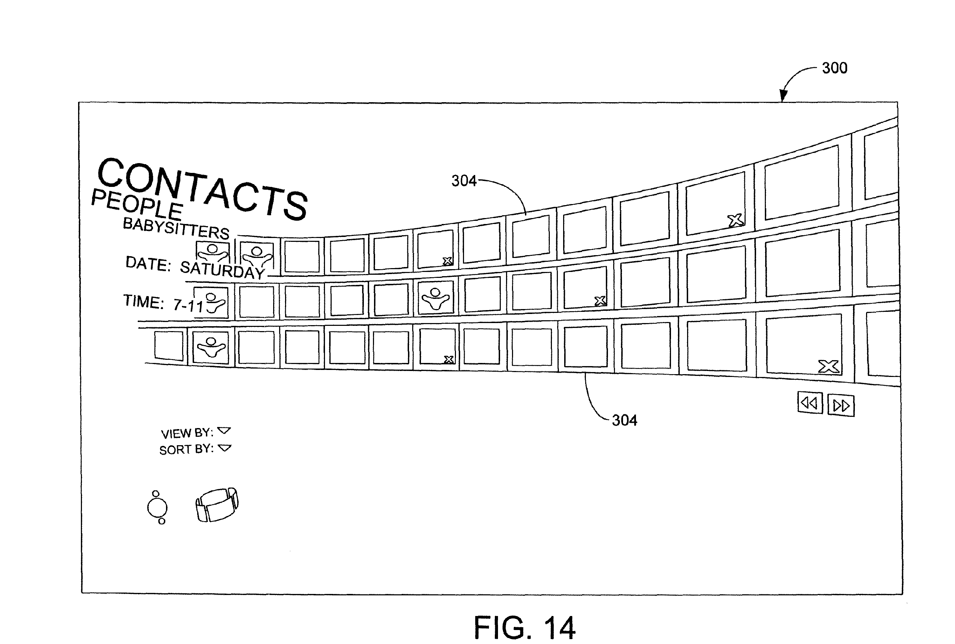

An identity verification display area 314 is provided in which a number of different identity verification services are offered from which the user may select one or more to which he/she is a member. For instance, if the user's identity and credentials have been verified through the Link Point identity verification service, selection of the "Link Point" link in the identity verification display area 314 of FIG. 13 will initiate verification of the user's identity and provide the user with access to information on other individual's whose identities have also been verified through the Link Point service. Thus, once applied, the photographs and accompanying information regarding those individual's will be available to the user. This is shown in FIG. 14.

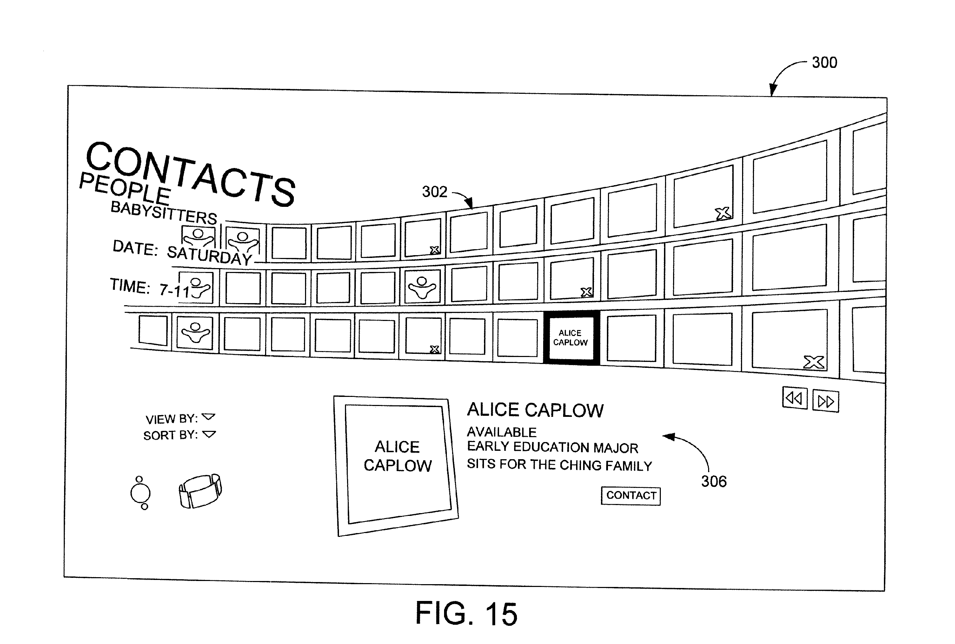

As with the visual images 304 shown in the view of FIG. 9, upon selection of each of the visual images 304 shown in the "Community" view represented on the display screen 300 of FIG. 14, the user may be linked to information about the individual whose photograph is displayed. Thus, if the visual image 304 in the bottom row of column 10 is selected, a larger version of Alice Caplow's photograph may be shown in the selection display area 306 of the screen display 300 along with information about Ms. Caplow, including her credentials and availability for the desired day and at the desired time. This is shown in FIG. 15.

A third exemplary scenario (not shown) in which the content scoping and display schemes of the present invention may be applied is with regard to security camera views. A user may have security cameras mounted throughout their own property and the community in which they live may have security cameras mounted at various places of interest, *e.g.*, bus stops and/or community recreation areas. Setting the scope to a "Family" view would provide the user with access to all security images taken from security cameras present on the user's own property. Expanding the scope to a "Community" view would additionally offer security images from the community cameras so that the user may, for instance, view their child playing at a community area park located remotely from their own property. The thumbnail views provided in the "Community" view would appear smaller on the viewable display area than the thumbnail views provided in the "Family" view as the number of images in the "Community" view would be greater. Note that in this instance, the subset of images available in the "Family" view may not be visible in the "Community" view or may be visible only subject to clearance from an identity verification and clearance service to protect the privacy of the user. In this example, expansion of the scope view to the "World" view would provide the user with access to web-cams and the like from around the world.

The content scoping and display schemes of the present invention may be utilized across all data types as well as with regard to functions which the system may be capable of performing. For instance, if lighting throughout a user's home may be controlled by the system as well as security and environment, the tools of the present invention may be applied to visually represent the varying options in a scoped fashion. Such variations are contemplated to be within the scope hereof.

As can be understood, the present invention provides a user control for dynamically adjusting the scope of a set of content, information, and/or data and a user interface for representing the same. The present invention further provides a method for applying scope to a set of data and representing the data on a UI in a manner which provides a readily visible indication of the amount of data in the data set and which provides for the prominent presentation of that data which may be most useful to the user.

The present invention has been described in relation to particular embodiments, which are intended in all respects to be illustrative rather than restrictive. Alternative embodiments will become apparent to those of ordinary skill in the art to which the present invention pertains without departing from its scope.

From the foregoing, it will be seen that this invention is one well adapted to attain all the ends and objects set forth above, together with other advantages which are obvious and inherent to the system and method. It will be understood that certain features and subcombinations are of utility and may be employed without reference to other features and subcombinations. This is contemplated and within the scope of the claims.

## Claims

1. A user interface embodied on at least one computer-readable medium, the user interface for representing data to a user, comprising:
a configurable visual image display area configured to display at least one visual image, the visual image being indicative of a data element within a data set; and
a scope menu display area configured to display a plurality of selectable scope links each indicative of a data scope capable of being applied to the data set.

2. The user interface of claim 1, whereby following a first of the plurality of selectable scope links allows the user to initiate a search of content available within the data scope indicated by the first selectable scope link.

3. The user interface of claim 2, whereby upon selection of the first selectable scope link, the configurable visual image display displays visual images indicative of a first quantity of topically-related data elements.

4. The user interface of claim 3, whereby upon selection of a second of the plurality of selectable scope links, the configurable visual image display displays visual images indicative of a second set of topically-related data elements.

5. The user interface of claim 4, wherein the first set of topically-related data elements comprises at least one fewer data element than the second set of topically-related data elements, and wherein the visual images indicative of the first set of topically-related data elements are larger than the visual images indicative of the second set of topically-related data elements.

6. The user interface of claim 1, wherein the user interface is viewable on a display device coupled with a computer.

7. The user interface of claim 1, wherein each visual image represents a selectable link to information comprising the data element represented thereby.

8. The user interface of claim 1, wherein the user interface is a three-dimensional user interface.

9. A computer-implemented method for representing data to a user, comprising:
displaying a first data set on a user interface;
receiving an indication of a scope to be applied to the first data set; and
displaying a second data set on the user interface, the second data set being determined in accordance with the indicated scope.

10. The method of claim 9, wherein displaying the first data set on the user interface comprises displaying the first data set on a three-dimensional user interface.

11. The method of claim 10, wherein displaying the second data set on the user interface comprises displaying the second data set on a three-dimensional user interface.

12. The method of claim 9, further comprising filtering at least one of the first data set and the second data set based upon at least one first criterion.

13. The method of claim 9, wherein the first data set includes a first quantity of data elements and wherein displaying the first data set on the user interface comprises displaying the first data set such that each data element of the first quantity of data elements is represented by a visual image indicative thereof.

14. The method of claim 13, wherein the second data set includes a second quantity of data elements and wherein displaying the second data set on the user interface comprises displaying the second data set such that each data element of the second quantity of data elements is represented by a visual image indicative thereof.

15. The method of claim 14, wherein the first quantity of data elements includes at least one data element fewer than the second quantity of data elements and wherein the visual images indicative of each data element of the first quantity of data elements are larger than the visual images indicative of each data element of the second quantity of data elements.

16. The method of claim 13, wherein displaying the first data set such that each data element of the first quantity of data elements is represented by a visual image indicative thereof comprises displaying the visual images indicative of each data element of the first quantity of data elements in an order determined by at least one second criterion.

17. The method of claim 16, wherein the second criterion is determined based upon at least one of relevance, alphabetical order, date, file type, favorites, and genre.

18. The method of claim 14, wherein displaying the second data set such that each data element of the second quantity of data elements is represented by a visual image indicative thereof comprises displaying the visual images indicative of each data element of the second quantity of data elements in an order determined by at least one second criterion.

19. The method of claim 18, wherein the second criterion is determined based upon at least one of relevance, alphabetical order, date, file type, favorites, and genre.

20. A computer programmed to perform the steps recited in the method of claim 9.

21. A computer-readable medium having computer-executable instructions embodied thereon for presenting a user interface on a display device, the interface for representing data to a user, comprising:
code for displaying a first data set on a user interface;
code for presenting a scope menu display having a plurality of selectable scope links each indicative of a data scope capable of being applied the first data set; and
code for displaying a second data set on the user interface, the second data set being determined in accordance with the indicated scope.

22. The computer-readable medium of claim 21, wherein the code for displaying the first data set of the user interface comprises code for displaying the first data set on a three-dimensional user interface.

23. The computer-readable medium of claim 21, wherein the code for displaying the second data set of the user interface comprises code for displaying the second data set on a three-dimensional user interface.

24. The computer-readable medium of claim 21, further comprising code for filtering at least one of the first data set and the second data set based upon at least one criterion.

25. The computer-readable medium of claim 21, wherein the code for displaying the first data set on the user interface comprises code for displaying at least one visual image on the user interface, the visual image being indicative of a data element within the first data set.

26. The computer-readable medium of claim 25, further comprising code for displaying the visual images in an order determined by at least one criterion.

27. The computer-readable medium of claim 21, wherein the code for displaying the second data set on the user interface comprises code for displaying at least one visual image on the user interface, the visual image being indicative of a data element within the second data set.

28. The computer-readable medium of claim 27, further comprising code for displaying the visual images in an order determined by at least one criterion.
